# EUROPEAN PATENT SPECIFICATION

(11) **EP 2 956 497 B1**
(45) Date of publication and mention of the grant of the patent: **04.01.2017**
(21) Application number: 14704171.9
(22) Date of filing: 13.02.2014
(51) Int. Cl.: C08J 5/24, C08G 59/40, C08K 3/00, C08K 5/00, C08L 63/00

(54) **FIRE RETARDANT EPOXY RESIN FORMULATIONS AND THEIR USE**
FEUERFESTE EPOXIDHARZFORMULIERUNGEN UND DEREN VERWENDUNG
FORMULATIONS IGNIFUGEANTES À BASE DE RÉSINE ÉPOXY ET LEUR UTILISATION

(30) Priority: 13.02.2013 GB 201302545
(43) Date of publication of application: 23.12.2015
(73) Proprietor: Hexcel Composites Limited, Duxford Cambridgeshire CB22 4QB (GB)
(72) Inventor: SEQUEIRA, Leela, Duxford Cambridgeshire CB22 4RG (GB)
(74) Representative: Pols, Ronald Maarten
(86) International application number: PCT/EP2014/052853
(87) International publication number: WO 2014/125044

(56) References cited:
- WO-A1-2011/015611

## Description

The present invention relates to improved epoxy resin formulations and in particular to epoxy resin formulations that can be used as the curable matrix in the production of prepregs and fibre reinforced epoxy resins. The invention also relates to prepregs containing the resin formulations, the cured prepreg and laminates containing the cured prepreg. The prepregs are particularly useful in the production of components employed in the aerospace industry and in particular as interior components and as part of the fuselage of aircraft including helicopters where they are also useful in the production of sleeves for rotor blades.

A fibrous layer impregnated with a curable resin is known herein as a prepreg and the resin in the prepreg may be uncured or partially cured. Epoxy resin formulations are frequently used in the production of prepregs. Epoxy formulations typically contain epoxy resins which may be selected from a wide range of epoxy containing materials according to the cure cycle to be employed and the nature of the finished article to be produced. Epoxy resins can be solid, liquid or semi-solid and are characterised by their functionality and epoxy equivalent weight. The functionality of an epoxy resin is the number of reactive epoxy sites per molecule that are available to react and cure to form the cured structure. For example, a bisphenol-A epoxy resin has a functionality of 2, certain glycidyl amines can have a functionality of more than 4. The reactivity of an epoxy resin is indicated by its epoxy equivalent weight (EEW), the lower the EEW the higher the reactivity. The EEW is the weight of epoxy resin material in grams containing 1 gram/mol of epoxy groups.

Epoxy formulations also include catalysts and/or curatives and these are also selected according to the nature of the epoxy resin, the product to be produced and the cure cycle that is required.

Epoxy resin systems are generally cured in a mould where several prepreg layers containing the fibrous reinforcement such as carbon fibre, glass fibre, kevlar and/or aramid fibre are superimposed perhaps being interspersed with layers of metal foil. The systems are then cured in the mould by heating.

Cured epoxy resin systems can be brittle and it is well known to include impact modifiers in the epoxy resin systems in order to reduce their brittleness. Typical impact modifiers that have been proposed are thermoplastic materials such as polyamides including nylon 6 and nylon 66 or polyethers, polyvinyl formal and polysulfones.

The properties required of a prepreg are that when cured it has the required Tg and also has the required mechanical properties according to the use to which it is to be put. In certain applications it is important that the Tg is retained under damp or humid conditions. Additionally when used in the production of laminar structures it must adhere to the adjacent layers in the laminate and for this use it is preferred that the prepreg is tacky to the touch, the tackiness being provided by the resin formulation.

Aircraft components must be strong, lightweight and have particular fire retardant properties and recently fibre reinforced composites particularly fibre filled epoxy resin systems have been used in the production of aircraft components including components used in the manufacture of fuselages of aircraft including helicopters. However there remains a requirement to provide a prepreg employing curable epoxy resin formulations as the matrix which can be cured at relatively low temperatures to provide materials having the range of properties required for use in aircraft, particularly for internal components and the fuselage of aircraft. An important property of such materials is fire retardancy of the cured prepreg and therefore the resin formulation employed as the matrix in the prepreg should comply with the Federal Aviation Regulations (FAR) on flammability as set out in the regulation FAR 25853 am 32 a and b.

Primary aircraft structures are the load bearing structures that comprise the airframe or are attached to the airframe and bear the loads from flight. As a result, composite materials that are used on these structure must meet the most stringent mechanical property requirements.

To achieve the necessary mechanical properties, composite materials for use on primary aircraft structures must comprise aerospace grade resins. These are resins which comprise a significant quantity of polyfunctional epoxy resins, preferably tetrafunctional epoxy resins. A suitable aerospace matrix for use on aircraft structures will have an enthalpy ΔH of no less than 500 J/g and a Tg of no less than 100 °C when cured at 120 °C. Resin Preimpregnated fibre reinforcement fabrics (prepregs) which contain an aerospace matrix exhibit a compression strength of around 500 MPa when cured at 120 °C. Preferably they also exhibit good tack at room temperature and high drum peel, and when cured without an autoclave, they have low porosity.

Other important properties of the resin formulation and the cured prepreg are cold storage, shelf life and retention of physical and mechanical properties under humid conditions. The cured prepreg-based composite must have the desired drum peel properties (self-adhesion) to ensure strong bonding to core materials such as honeycomb core.

Tackiness may also be required if the prepreg employing the resin formulation as the matrix is to be bonded to other materials such as to other prepregs or to honeycomb materials. Tack (prepreg adhering to an adjacent layer of prepreg) is generally assessed using the standard IGC 04.26.220. In this test, sheets of prepreg are tested to see if they would stick to themselves, if the prepreg can be removed after lay up without deterioration to the prepreg, and if prepreg mounted on a vertical PTFE surface can maintain in this position over a certain length of time. In all cases, the tests must be passed satisfactory for the prepreg to have advantageous adhesiveness, and self-adhesiveness properties.

Cold storage is indicated by the retention of inter-laminar shear stress at -18°C according to DIN EN2563 of up to 12 months together with a retention of glass transition temperature as measured according to DIN EN6041. The resin formulation must additionally have a shelf life to enable storage prior to use. Typically the resin should retain its properties for at least 15 days when stored at about 20°C at a relative humidity of 65%. The cured product should also retain its physical and mechanical characteristics when exposed to humid conditions according to DIN EN 2563 and also have acceptable damage tolerance and compression strengths under both wet and dry conditions as detailed by DIN EN 2850.

In addition to these physical property requirements for the resin and prepregs containing the resin formulation, it is important that the resin formulation satisfy certain processing requirements. For example it should not have too great an exotherm during curing as indicated by DSC measurements according to DIN EN 6045, typically the exotherm should be no greater than 450 Joules per gram of the resin. The resin formulation is preferably curable at a temperature between 120°C and 140°C, preferably between 120°C and 130°C within 2 hours in an autoclave, closed mould or an oven. These properties can be accomplished by the selection of the functionality and the EEW of the formulation together with the selection of the curative system. If possible aircraft manufacturers prefer to cure at lower temperatures e.g. at 120°C or 130°C because it reduces energy costs.

Flame retardant epoxy resins and prepregs in which the resin matrix is a flame retardant epoxy resin are known for example from US2012/0164373, US2008/0315164 and WO 2008/136096. Many of the references are concerned with prepregs for use in electrical applications such as circuit boards and electrical installations. US2008/0315164 discloses prepregs which exhibit excellent flame retardant properties and also maintain desired mechanical properties for applications in articles such as vehicle interiors, ceilings, partitions, walls etc. The materials are shown to satisfy the flammability requirement VO in the UL94 flammability test. US 2008/0315164A is however not concerned with the provision of materials that satisfy the stringent requirements for use in aircraft applications.

GB2472423 discloses fire retardant composite materials. Disclosed in the example is a prepreg with a dicyandiamide curative and a urone accelerator in combination with an imidazole catalyst. This document does not disclose any mechanical properties of the resin, or its cure properties. This document also fails to disclose actual formulations and none of the performance properties are supported by data of actual formulations.

The present invention aims to solve any one of the aforementioned problems and/or to provide improvements generally.

According to the invention there is provided a formulation, a prepreg, a structure, a use and a component as defined in any one of the accompanying claims.

The invention provides an epoxy resin system that can be used as a matrix in prepregs that can be cured to satisfy the properties required for aircraft components such as fuselages, sleeves for rotor blades in helicopters and internal and external panels, whilst also being flame retardant and curable at a low temperature. The present invention is also suitable for use on aircraft primary structures. The present invention achieves this by using a curative system comprising a dihydrazide and a urone. In an embodiment of the present invention the curative system is used in combination with a resin of EEW of from 100 to 250.

Curing at a low temperature reduces the Tg of the final matrix, thus for a low cure system it is particularly challenging to meet the mechanical properties required for use on aircraft primary structures. The addition of flame retardants and tougheners to a matrix are well known for having a deleterious effect on mechanical properties such as compression and tensile strength. Thus it would not be expected to achieve the balance of mechanical properties of the present invention when a matrix comprising tougheners and flame retardants is cured at a low temperature.

Surprisingly the present invention exhibits excellent self-adhesive properties, tack, and out of autoclave performance.

The present invention provides an epoxy resin formulation suitable for such applications a prepreg containing the formulation as the matrix, the cured prepreg and laminates containing the cured prepreg and aircraft components based on such cured prepregs and/or laminates. In a first embodiment the invention therefore provides the use of a formulation comprising:
a) a polyfunctional epoxy resin,preferably comprising at least one tetrafunctional epoxy resin
b) a phenoxy resin
c) a toughener or modifier, preferably a rubber toughener or modifier
d) a fire retardant
e) a curative system.

The curative system may comprise a hydrazide curative. Preferably, the curative system comprises a hydrazide curative in combination with a urea based accelerator. More preferably, the curative system is free from an amine curing agent, preferably a multifunctional amine curing agent. The curative system is free from a cyandiamide curing agent such as dicyandiamide. The curative system may also be free from an imidazole curing agent.

We have discovered that a curative system comprising a hydrazide curative and a urea based accelerator in the absence of an amine curing agent and/or an imidazole curing agent results in a matrix formulation having advantageous viscosity properties during cure over the temperature range of from 60 to 140 °C, preferably from 70 to 140 °C.

Preferably, the composition is used as a matrix in combination with fibrous reinforcement material whereby the matrix preimpregnates the fibrous reinforcement material to form a prepreg which may be used in the production of aircraft components, in particular helicopter components.

It is preferred that the formulation is free of solvent. Alternatively, the composition may contain a solvent such as methyl ethyl ketone (MEK).

Additionally the invention provides a formulation (based on the weight of the formulation) comprising:
a. from 10 to 60 wt% of a polyfunctional epoxy resin
b. from 3 to 20 wt% of a phenoxy resin
c. from 5-50 wt% of a toughener or modifier
d. from 3-20 wt% of a fire retardant
e. from 1-15 wt% of a curative system, whereby the formulation is free from a cyandiamide curative and
where the fire retardant may be a mixture of a fire retardant substance and resin and where the toughener may be a mixture of a toughener agent and a resin.

Preferably the mixture comprises from 30 to 70 wt% of fire retardant. Examples include Exolit RP6500. Preferably the mixture comprises from 20 to 50 wt% of toughening agent. Examples include MK153 by Kaneka.

Preferably the invention provides a formulation (based on the weight of the formulation) comprising:
a. from 25 to 60 wt% of a polyfunctional epoxy resin
b. from 4 to 18 wt% of a phenoxy resin
c. from 10 to 40 wt% of a toughener or modifier
d. from 3 to 15 wt% of a fire retardant/
e. from 5 to 15 wt% of a curative system

More preferably the invention provides a formulation (based on the weight of the formulation) comprising:
a. from 35 to 60 wt% of a polyfunctional epoxy resin
b. from 5 to 15 wt% of a phenoxy resin
c. from 15 to 30 wt% of a toughener or modifier
d. from 3 to 10 wt% of a fire retardant
e. from 7 to 15 wt% of a curative system

More preferably the invention provides a formulation (based on the weight of the formulation) comprising:
a. from 45 to 55 wt% of a polyfunctional epoxy resin
b. from 5 to 8 wt% of a phenoxy resin
c. from 15 to 25 wt% of a toughener or modifier
d. from 3 to 8 wt% of a fire retardant
e. from 10 to15 wt% of a curative system

More preferably the invention provides a formulation (based on the weight of the formulation) comprising:
a. from 50 to 60 wt% of a polyfunctional epoxy resin
b. from 7 to 12 wt% of a phenoxy resin
c. from 20 to 30 wt% of a toughener or modifier
d. from 4 to 10 wt% of a fire retardant
e. from 12 to 15 wt% of a curative system

Most preferably the invention provides a formulation (based on the weight of the formulation) comprising:
a. from 50 to 55 wt% of a polyfunctional epoxy resin
b. from 7 to 8 wt% of a phenoxy resin
c. from 20 to 25 wt% of a toughener or modifier
d. from 4 to 6 wt% of a fire retardant
e. from 12 to 14 wt% of a curative system
and/or combinations of the ranges expressed in the above formulations.

It is preferred that any of the formulations are disclosed herein are free of a solvent.

The invention further provides the use of such a resin formulation as a matrix in a prepreg.

The combination of the presence of the fire retardant and the absence of a solvent in this formulation has been found to provide a resin system that can be used in prepregs to produce components that satisfy the FAR 25853 flame retarding regulations.

We have also found that such a desirable combination of properties may be further enhanced by employing a rubber epoxy adduct in the formulations of the invention. The rubber epoxy adduct is compatible with the epoxy resins as the formulation cures to provide the required strength and Tg and the thermoplastic component contributes to providing the required elongation.

It is preferred that the formulations of this invention are liquid at ambient temperature.

The formulations of the present invention are useful in the formation of prepregs. The prepregs are also embodiments of this invention. The prepregs of this invention may contain glass fibre, carbon fibre and/or aramid fibre which may be woven, non-woven, unidirectional or multidirectional. In a preferred embodiment of this invention the prepregs are laid-up with other layers of materials which may be other composite materials (e.g. other prepregs according to the invention or other prepregs) to produce a prepreg stack which can be cured to produce a fibre reinforced laminate. The prepregs may also be bonded to other layered structures such as honeycomb structures and metal foils.

The prepreg is typically produced as a roll of prepreg and in view of the preferred tacky nature of such materials, a backing sheet is generally provided to enable the roll to be unfurled at the point of use. Thus, preferably the prepreg according to the invention comprises a backing sheet on an external face.

### Epoxy Resin

The epoxy resin used in this invention is polyfunctional, which has a functionality of at least 2, preferably a functionality of 3 or 4. It preferably has a high reactivity as indicated by an EEW in the range from 100 to 1500, preferably from 100 to 350, more preferably from 100 to 300, most preferably an EEW in the range of from 100 to 250 and/or combinations of the aforesaid ranges.

Suitable difunctional epoxy resins, by way of example, include those based on diglycidyl ether of bisphenol F, diglycidyl ether of bisphenol A (optionally brominated), phenol and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Tetrafunctional resins are preferred resins for use as the multifunctional resin for the formulation of this invention and suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), Araldite ECN 1299 and Araldite MY9512 (from Huntsman Advanced Materials).

The formulation of this invention may also include other epoxy resins such as novolac resins, phenolic end capped bisphenol A resin. Suitable resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof. An example of a suitable resin is Araldite EP820.

### Fire Retardants

Any suitable fire retardant may be used in the formulations of this invention. Useful fire retardants include, halogenated polymers, other halogenated materials, materials (e.g. polymers) including phosphorous, bromine, chlorine, oxide and combinations thereof. Exemplary flame retardants include, without limitation, chloroalkyl phosphate, dimethyl methylphosphonate, bromine-phosphorus compounds, ammonium polyphosphate, neopentylbromide polyether, brominated polyether, antimony oxide, dihydro-oxa-phospha-penanthrene-oxide, calcium metaborate, chlorinated paraffin, brominated toluene, hexabromobenzene, antimony trioxide, graphite (e.g. expandable graphite), combinations thereof or the like. Other flame retardants that may be used include tricresyl phosphate and aluminium trihydrate. It is preferred that for use in the manufacture of aircraft components the flame retardant is halogen free.

Examples of phosphorus containing fire retardants that may be used include red phosphorus organophosphorous compounds, ammonium phosphates particularly polyphosphates such as Exolit AP462 obtainable from Clariant, melamine phosphates or pyrophosphates and phosphinates. The metal oxide, hydroxide or hydrate fire retardant may be any know metal containing fire retardant. Preferred materials include aluminium tri-hydrate and magnesium hydroxide.

Heat expandable graphite is known as a fire retardant from for example United States in Patents 3574644 and 5650448 which describes its use in polymer foams for aircraft seating may also be used.

The graphite used is preferably heat expandable graphite (HEG) and may be any of those well-known in the art, such as those described by Titelman, G.I., Gelman, V. N., Isaev, Yu. V and Novikov, Yu. N., in Material Science Forum, Vols. 91-93,213-218, (1992) and in US Patent 6,017,987. The heat expandable graphite decomposes thermally under fire into a char of expanded graphite, providing a thermally insulating barrier, which resists further oxidation.

The flame retardant may be present in an amount of from 5 to 20 wt% of the formulation. The flame retardant is preferably a blend of a flame retardant particle in an epoxy resin. Preferably the blend includes about 1:5 to 5:1 parts of epoxy to flame retardant, and more preferably about 1:3 to 3:1 parts of epoxy to retardant. More typically, the flame retardant blend includes at least about 30%, more typically at least about 40% and even more typically at least about 50% flame retardant and also typically includes not greater than about 70%, even more typically no greater than about 60% and still more typically no greater than about 55% flame retardant, although higher or lower percentages are possible.

Preferably the wt% of the flame retardant particle is present in a formulation of the invention at an amount from 1 to 15%, or more preferably from 2 to 10% or more preferably still from 2 to 4%, and/or combinations of the aforesaid ranges.

### Phenoxy Resin

Phenoxy resins are used in the formulations of the present invention as modifiers, tougheners or hardeners. A phenoxy resin is a polyhydroxyether, with ether linkages along the polymer backbone and pendant hydroxyl groups. One useful phenoxy resin is the reaction product of a phenol based difunctional epoxy resin and a difunctional phenol (for example the reaction product of bisphenol A epoxy with bisphenol A). A similar material may also be synthesized directly from a bisphenol (for example bisphenol A) and epichlorohydrin. The terminal epoxy group may be ring opened to generate a terminal alpha glycol group. The phenoxy resins typically have weight-average molecular weights of at least about 5,000, more typically at least about 25,000 and still more typically at least about 50,000 but less than about 100,000, more typically less than about 75,000 and still more typically less than about 60,000. Examples of useful phenoxy resins include PAPHEN Phenoxy Resin PKHH and PKHJ from Inchem Corp. and Phenoxy resins available from Kukdo such as Phenoxy YP50.

The Phenoxy resins preferably comprise between 3% and 20% by weight of the formulation of this invention and even more preferably between 4% and 10% more preferably between 5% and 10%.

### Curing Agent

The curing agents assist the curing of the formulation of the present invention by crosslinking of the epoxy resin groups and other ingredients in the formulation. The amount of curing agents and/or curing agent accelerators present in the formulation ranges from about 1% by weight to about 15% by weight and more typically from about 2 to about 12 wt %. The curing agent materials can be selected from aliphatic or aromatic amines or their respective adducts, amidoamines, polyamides, cycloaliphatic amines, anhydrides, polycarboxylic polyesters, isocyanates, phenol-based resins (e.g., phenol or cresol novolak resins, copolymers such as those of phenol terpene, polyvinyl phenol, or bisphenol-A formaldehyde copolymers, bishydroxyphenyl alkanes or the like), dihydrazides, sulfonamides, sulfones such as diamino diphenyl sulfone, anhydrides, mercaptans, imidazoles, ureas, tertiary amines, BF3 complexes or mixtures thereof. Particularly preferred curing agents include hydrazides, particularly polyhydrazides. The hydrazide may comprise a monohydrazide, dihydrazide, trihydrazide or tetrahydrazide. Dihydrazides and trihydrazides are preferred, particularly dihydrazides.

Suitable hydrazides include, but are not limited to, 2,4-dihydroybenzoic acid hydrazide, oxalyl dihydrazide, 4-amino benzoic hydrazide, isophthalic dihydrazide, sebastic acid dihydrazide, adipic acid dihydrazide, icosanedioic acid dihydrazide, succinic dihydrazide, 3-fluorobenzoic hydrazide, valine dihydrazide, toluene sulphonic acid and 2-furoic hydrazide.

Preferably the hydrazide is selected from the list consisting of sebastic acid dihydrazide, adipic acid dihydrazide, icosanedioic acid dihydrazide, succinic dihydrazide, 3-fluorobenzoic hydrazide, valine dihydrazide, toluene sulphonic acid and 2-furoic hydrazide.

An accelerator for the curing agents (e.g., a modified or unmodified urea such as methylene diphenyl bis urea commercially available as urones, an imidazole, blocked amine or a combination thereof) may also be provided in the curative or curing system. Often accelerators are also referred to as curatives or curing agents although they enhance the performance of a curative or curing agent. For example, urea based accelerators such as urones are also referred to as curing agents.

In particular urea based accelerators are preferred. The urea accelerator may comprise a bis urea curing agent, such as 2,4 toluene bis dimethyl urea or 2,6 toluene bis dimethyl urea, 4,4'-Methylene bis (phenyl dimethyl urea) and/or combinations of the aforesaid curing agents. Urea based accelerators may also be referred to as "urones".

Other suitable urea based accelerators may comprise:

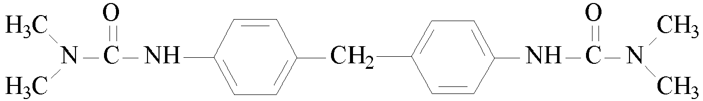

### 4,4-methylene diphenylene bis(N,N-dimethyl urea)

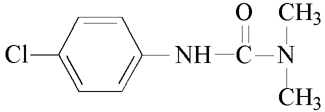

### 1,1-dimethyl, 3-(4-chlorophenyl)urea

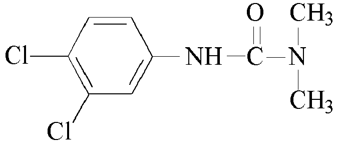

### 1,1-dimethyl, 3-(3,4-dichlorophenyl)urea

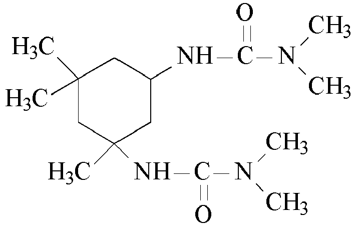

### Isophorone bisdimethyl urea

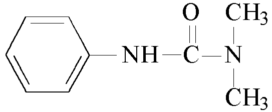

### 1,1-dimethyl, 3-phenyl urea

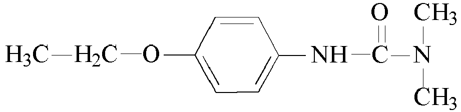

### 1,1-dimethyl, 3-(4-ethoxyphenyl)urea

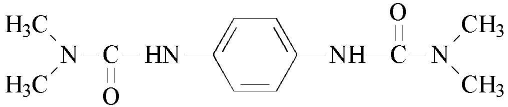

### 1,1-(4-phenylene)-bis(3,3-dimethyl)urea

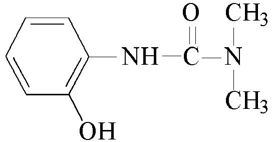

### 1,1-dimethyl, 3-(2-hydroxyphenyl)urea

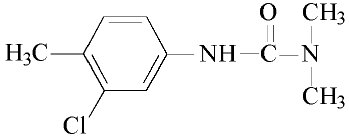

e

### 1,1-dimethyl,3-(3-chloro-4-methylphenyl)urea

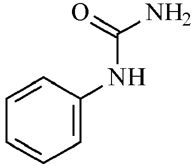

### N-Phenylurea

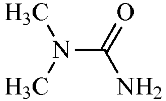

### N,N-Dimethylurea

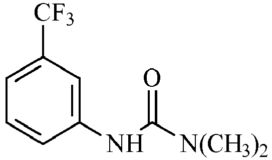

### Fluomethuron

Preferred urea based materials are the range of materials available under the commercial name DYHARD® the trademark of Alzchem, urea derivatives, which include bis ureas such as UR505, UR500 and Omnicure U52M.

The formulation may contain other additives such as flexibilizers, impact modifiers, polymers or copolymers fillers and other elongation promoting additives.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

One desirable property for the epoxy formulations of this invention is that upon curing they have a high elongation at break so that fracture is delayed when deformation occurs. In addition high strain to failure materials are often, but not always, more impact resistant.

The elongation of the cured prepreg and laminates containing it indicate its ability to deform under stress, the greater the elongation the greater the ability to deform without fracturing. An example of the benefit of high elongation is when the substrate or substrates upon which the formulation is employed undergoes plastic deformation. A high level of elongation becomes particularly important as the thickness of the material utilized increases.

In a preferred embodiment the curing system comprises a dihydrazide. A particularly preferred curative is adipic dihydrazide. In a preferred embodiment the dihydrazide is present in combination with a urea based cure accelerator such as a urone in the curative system. This curative system has been found to result in a matrix having improved wet Tg. The matrix also exhibits improved self-adhesion and out of auto-clave performance.

The curing system is free from any cyandiamide curative such as dicyandiamide (DICY).

In an embodiment the curative system or curing system is free from any latent amine curative. In a preferred embodiment the curing system is free from any multifunctional amine curative, more preferably the curing system is free from any cyan based amine.

### Toughener

The composition of the invention comprises a modifier. The modifier may toughen the resin composition and may therefore be considered a toughener. The toughener is preferably premixed with an epoxy resin. The toughener may also be adducted to the epoxy resin.

The toughener may be in the form of a core shell elastomer. The core shell elastomer used in the formulation of this invention is preferably a blend of a core shell elastomer particle in an epoxy resin. These materials generally include about 1:5 to 5:1 parts of epoxy to elastomer, and more preferably about 1:3 to 3:1 parts of epoxy to elastomer. More typically, the core shell elastomer includes at least about 5%, more typically at least about 12% and even more typically at least about 18% elastomer and also typically includes not greater than about 50%, even more typically no greater than about 40% and still more typically no greater than about 35% elastomer, although higher or lower percentages are possible. Preferably the wt% of the core shell particle alone is present in an amount from 5 to 40%, or more preferably from 10 to 30% or more preferably still from 15 to 20%, and/or combinations of the aforesaid ranges.

The elastomer may be functionalized at either the main chain or the side chain. Suitable functional groups include, but are not limited to, -COOH, -NH_{2'}, -NH-, -OH, -SH, -CONH₂,-CONH-, -NHCONH-, -NCO, -NCS, and oxirane or glycidyl group etc. The elastomer optionally may be vulcanizeable or post-crosslinkable. Exemplary elastomers include, without limitation, natural rubber, styene-butadiene rubber, polyisoprene, polyisobutylene, polybutadiene, isoprenebutadiene copolymer, neoprene, nitrile rubber, butadiene-acrylomitrile copolymer, butyl rubber, polysulfide elastomer, acrylic elastomer, acrylonitrile elastomers, silicone rubber, polysiloxanes, polyester rubber, disocyanatelinked condensation elastomer, EPDM (ethylene-propylene diene rubbers), chlorosulfonated polyethylene, fluorinated hydrocarbons, thermoplastic elastomers such as (AB) and (ABA) type of block copolymers of styrene and butadiene or isoprene, and (AB)n type of multi-segment block copolymers of polyurethane or polyester, and the like. In the case that carboxyl-terminated butadiene-acrylonitrile (CTBN) is used as the functionalized elastomer, the preferable nitrile content is from 5-35% by weight based on the resin composition, more preferably from 20-33% by weight based on the resin composition.

Preferably, the core shell elastomer is a core shell rubber.

Core shell elastomers are frequently sold in admixture with an epoxy resin and these products are useful in the present invention. A suitable material is the MX range of products available from Kaneka such as MX153 and MX416.

In another embodiment the core shell elastomer/epoxy resin composition may be in the form of an elastomer/epoxy adduct. An example of a preferred epoxide-functionalized epoxy/core shell elastomer which is sold in admixture with an epoxy resin is the product with the trade name HyPox™ RK84, a bisphenol A epoxy resin blended with CTBN elastomer, and also the product with the trade name HyPox™ RA1340, an epoxy phenol novolac resin modified with CTBN elastomer, both commercially available from CVC Thermoset Specialities, Moorestown, NJ. In addition to bisphenol A epoxy resins, other epoxy resins can be used to prepare the epoxy/elastomer adduct, such as n-butyl glycidyl ether, styrene oxide and phenylglycidyl ether; bifunctional epoxy compounds such as bisphenol A diglycidyl ether, bisphenol F diglycidyl ether, bisphenol S diglycidyl ether and diglycideyl phthalate; trifunctional compounds such as triglycidul isocyanurate, triglycidyl p-aminophenol; tetrafunctional compounds such as tetraglycidyl m-xylene diamine and tetraglycidyldiaminodiphenylmethane; and compounds having more functional groups such as cresol novolac polyglycidyl ether, phenol novolac polyglycidyl ether and so on.

The preferred concentrations of the components in the epoxy formulation of this invention depend upon the intended application of the formulation material however, the preferred range of proportions of the component of the epoxy resin formulation is set out in the following table (weight% in relation to the total weight of the resin composition).

**Table 3.**

| | **Minimum wt%** | **Maximum wt%** |
|---|---|---|
| Polyfunctional epoxy resin | 10 | 60 |
| Phenoxy resin | 3 | 20 |
| Toughener* | 5 | 50 |
| Fire retardant* | 3 | 20 |
| Curative agent and/or accelerator | 1 | 15 |

| | | |
|---|---|---|
| * As supplied as a mixture with epoxy resin. | | |

In a preferred embodiment the invention comprises a curing agent and accelerator. Where a curing agent and accelerator are used in combination the curing agent is used from 0.5 to 15 wt %, more preferably still from 5 to 10 wt% and most preferably from 6 to 8 wt%.

For a toughener comprising a core shell rubber the minimum and maximum wt% are as shown in Table 3. For a toughener comprising a rubber adduct, the minimum wt% of core shell rubber is 15 wt% and the maximum wt% is 50 wt%.

The formulations of this invention may contain other additives used in epoxy formulation such as antioxidants, colorants and processing aids.

The epoxy resin formulation of the present invention is particularly useful as the matrix in prepregs. The prepregs of this invention are produced by impregnating a fibrous material with an epoxy resin formulation of the invention.

### Reinforcing Fibres

The reinforcing fibres employed in the prepreg of this invention may be synthetic or natural fibres or any other form of material or combination of materials that combined with the resin composition of the invention to form a composite product. The reinforcement web can either be provided via spools of fibre that are unwound or from a roll of textile. Exemplary fibres include glass, carbon, graphite, boron, ceramic metalized fibres and aramid fibres. Preferred fibres are carbon and glass fibres. Hybrid or mixed fibre systems may also be envisaged. The use of cracked (i.e. stretch-broken) or selectively discontinuous fibres may be advantageous to facilitate lay-up of the product according to the invention and improve its capability of being shaped. Although a unidirectional fibre alignment is preferable, other forms may also be used. The surface mass of fibres within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fibreglass reinforcements, fibres of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

The structural fibres will be chosen according to the use of the prepreg. Glass and carbon fibres are preferred carbon fibre, being preferred for components for aircraft including helicopters. The structural fibres, may be individual tows made up of a multiplicity of individual fibres and they may be woven or non-woven fabrics. The fibres may be unidirectional, bidirectional or multidirectional according to the properties required in the final laminate. Typically the fibres will have a circular or almost circular cross-section with a diameter in the range of from 3 to 20 µm, preferably from 5 to 12 µm. Different fibres may be used in different prepregs used to produce a cured laminate. A prepreg having a fibre content of from 20 to 50 wt % preferably from 35 to 50 wt % and 40 to 50 wt % is particular preferred.

In order to increase the rate of impregnation, the process is preferably carried out at an elevated temperature so that the viscosity of the resin formulation is reduced. However it must not be so hot for a sufficient length of time that premature curing of the resin occurs. Thus, the impregnation process is preferably carried out at temperatures in the range of from 40°C to 80°C.

The resin formulation can be spread onto the external surface of a roller and coated onto a paper or other backing material to produce a layer of curable resin. The resin formulation can then be brought into contact with the fibrous layer for impregnation perhaps by the passage through rollers. The resin formulation may be present on one or two sheets of backing material, which are brought into contact with the fibrous layer and by passing them through heated consolidation rollers to cause impregnation. Alternatively the resin formulation can be maintained in liquid form in a resin bath either being a resin that is liquid at ambient temperature or being molten if it is a resin that is solid or semi-solid at ambient temperature a solvent should not be employed. The liquid resin formulation can then be applied to a backing employing a doctor blade to produce a film of the resin formulation on a release layer such as paper or polyethylene film. The structural fibrous layer may then be placed into the resin formulation and optionally a second layer of the resin formulation may be provided on top of the fibrous layer. Solvents that have been used in epoxy resin formulations are organic liquids such as hydrocarbon solvents and these are preferably avoided as they are flammable materials. The formulations are therefore preferably free of solvent.

The preferred process for producing prepregs is a continuous process involving the passage of many thousands of fibres through a series of stages, typically guided by rollers. The point where the fibres meet the epoxy resin formulation of the invention, is the start of the impregnation stage. Before the fibres are contacted with the resin formulation and reach the impregnation zone they are typically arranged in a plurality of tows, each tow comprising many thousands of filaments, e.g. 12,000. These tows are mounted on bobbins and are fed initially to a combing unit to ensure even separation of the fibres. It has been found that unusually low fibre tensions just after the bobbin feed position provide further improvement to the disruption of the fibres in the eventual prepreg. Thus, the tension per filament at this position is preferably from 0.0007 to 0.025 g, preferably from 0.01 to 0.015 g.

In the process a second layer of the resin formulation maybe brought into contact with the other face of the fibres typically at the same time as the first layer, compressing the first and second layers of resin such that resin enters the interstices of the fibres. Such a process is considered to be a one-stage process because, although each face of the fibres is contacted with one resin layer, all the resin in the eventual prepreg is impregnated in one stage.

Resin impregnation typically involves passing the resin formulation and fibres over rollers, which may be arranged in a variety of ways. Two primary arrangements are the simple "nip" arrangement and the "S-wrap" arrangement.

An S-wrap stage is wherein the resin formulation and fibres, both in sheet form pass around two separated rotating rollers in the shape of the letter "S", known as S-wrap rollers. Alternative roller arrangements include the widely used "nip" wherein the fibre and the resin formulation are pinched, or nipped, together as they pass between the pinch point between two adjacent rotating rollers. The pressures induced in the resin formulation and the fibres can be controlled to cause the desired degree of disruption of the fibre. Parameters such as separation between rollers, speed, relative speed between rollers and resin formulation and fibres and the contact area of the rollers can be varied to achieve the desired degree of disruption and also resin impregnation.

Nip stages may also be used, provided the pressures are kept low, e.g. by control over the gap between adjacent rollers.

It has been found that although large pressures in theory provide excellent resin impregnation by the resin formulation, they can be detrimental to the outcome of the prepreg in the one-stage process.

Thus, it is preferred that the pressure exerted onto the fibres and the resin formulation preferably does not exceed 35 kg per centimetre of width of the fibre layer, more preferably does not exceed 30 kg per centimetre.

For example, when in S-wrap arrangement, two rollers are preferably spaced apart to provide a gap between the centres of them of from 250 to 600 mm, preferably from 280 to 360 mm, most preferably from 300 to 340 mm, e.g. 320 mm.

Two adjacent pairs of S-wrap rollers are preferably separated between the centres of respective rollers of from 200 to 1200 mm, preferably from 300 to 900 mm, most preferably from 700 to 900 mm e.g. 800 mm.

The impregnation rollers may rotate in a variety of ways. They may be freely rotating or driven. If driven, they are conventionally driven so that there is no difference between the speed of rotation and the speed of passage of the resin formulation and fibres over the rollers. Sometimes it may be desirable to apply a slight increased speed or decreased speed relative to the passage of the resin formulation and the fibres. Such a difference is referred to in the art as "trim".

Following impregnation of the resin formulation into the fibres, often there is a cooling stage and further treatment stages such as laminating, slitting and separating.

The prepreg of the invention may be characterized by the resin content of the resin formulation and/or its fibre volume and resin formulation volume and/or its degree of impregnation as measured by the water up take test.

Resin formulation and fibre content of uncured moulding materials or structures are determined in accordance with ISO 11667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin formulation and fibre content of cured moulding materials or structures which contain carbon fibrous material are determined in accordance with DIN EN 2564 A.

The fibre and resin formulation volume % of a prepreg moulding material or structure can be determined from the weight % of fibre and resin by dividing the weight % by the respective density of the resin formulation and carbon fibre.

The % of impregnation of a tow or fibrous material which is impregnated with resin formulation is measured by means of a water pick up test.

The water pick up test is conducted as follows. Six strips of prepreg are cut of size 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fibre orientation of the prepreg is extends along the protruding part. A clamp is placed on the opposite end, and 5 mm of the protruding part is immersed in water having a temperature of 23°C, relative air humidity of 50% +/- 35%, and at an ambient temperature of 23°C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

Typically, the values for the resin formulation content by weight for the uncured prepreg of the invention are in the ranges of from 15 to 70% by weight of the prepreg, from 18 to 68% by weight of the prepreg, from 20 to 65% by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 35 to 50% by weight of the prepreg, from 44 to 47% by weight of the prepreg and/or combinations of the aforesaid ranges.

### Properties of the resin formulation

At room temperature (23°C), the resin formulation preferably has a relatively high viscosity, typically in the range of from 1000 to 100,000 Pa.s, more typically in the range of from 5000 Pa.s to 500,000 Pa.s. Also, the resin formulation may be tacky. Tack is a measure of the adhesion of a prepreg to a tool surface or to other prepreg plies in an assembly. Tack may be measured in relation to the resin itself or in relation to the prepreg in accordance with the method as disclosed in "Experimental analysis of prepreg tack", Dubois et al, (LaMI)UBP/IFMA, 5 March 2009. This publication discloses that tack can be measured objectively and repeatably by using the equipment as described therein and by measuring the maximum debonding force for a probe which is brought in contact with the resin or prepreg at an initial pressure of 30N at a constant temperature of 30°C and which is subsequently displaced at a rate of 5 mm/min. For these probe contact parameters, the tack F/F_{ref} for the resin is in the range of from 0.1 to 0.6 where F_{ref} = 28.19N and F is the maximum debonding force. For a prepreg, the tack F/F_{ref} is in the range of from 0.1 to 0.45 for F/F_{ref} where F_{ref} = 28.19N and F is the maximum debonding force. However, a fibrous support web, grid or scrim may also be located on at least one exterior surface of the fibrous reinforcement to further enhance the integrity of the material or structure during handling, storage and processing.

In an embodiment of the invention the composition has adequate tack or adhesiveness to allow a resin preimpregnated reinforcement material (prepreg) to adhere to other materials such as honeycomb, previously laid up prepreg material layers and/or mould surfaces. The tack of the resin composition enables the prepreg to be laid up and be repositioned. The prepreg has suitable self-adhesion to allow the prepreg to be laid up and removed from an adjacent layer of prepreg without deterioration of the prepreg. Preferably the prepreg complies with standard IGC 04.26.220.

The epoxy resin formulation of the invention which is used as the matrix resin material in the prepreg preferably has a storage modulus G' of from 1 x 10³ Pa to 1 x 10⁴ Pa, preferably of from 2.5 x 10³ Pa to 3.8 x 10³ Pa at a temperature of 60°C and a loss modulus G" of from 1 x 10³ Pa to 1 x 10⁴ Pa, preferably of from 4.5 x 10³ Pa to 7 x 10³ Pa at room temperature of 60°C.

Preferably, the resin formulation has a complex viscosity of from 200 to 600 Pa.s, more preferably from 250 to 500 Pa.s, most preferably 430 to 480 Pa.s, at a temperature of 60°C, and/or combinations of the aforesaid ranges.

The minimum viscosity of the formulation according to the invention may be in the range of from 5 to 150 Pa.s, preferably from 30 to 100 Pa.s, and more preferably from 40 to 50 Pa.s at a temperature ranging from 90 to 130 °C, more preferably from 100 to 125 °C, and even more preferably from 110 to 120 °C and/or combinations of the aforesaid ranges (for both viscosity and temperature).

We have discovered that the minimum viscosity of the formulation can be controlled by selecting a suitable curative system. A curative system which is free from a latent amine curative is preferred.

In another embodiment of the invention, the formulation has a viscosity coefficient defined as Δ<η>/ ΔT where Δ<η> is the average difference of the viscosity over temperature interval ΔT, in the range of from -1 to -25 Pa.s/°C, preferably from -10 to -16 Pa.s/°C and more preferably from -12 to -14 Pa.s/°C over the temperature range of from 60 to 90 °C.

In a further embodiment, the formulation has a viscosity coefficient Δ<η>/ ΔT in the range of from -0.01 to -3 Pa.s/°C, preferably from -0.1 to -2 Pa.s/°C more preferably from -1 to -1.5 Pa.s/°C the temperature range of from 90 °C to Tmin where Tmin is the temperature for which the viscosity of the resin is at its minimum.

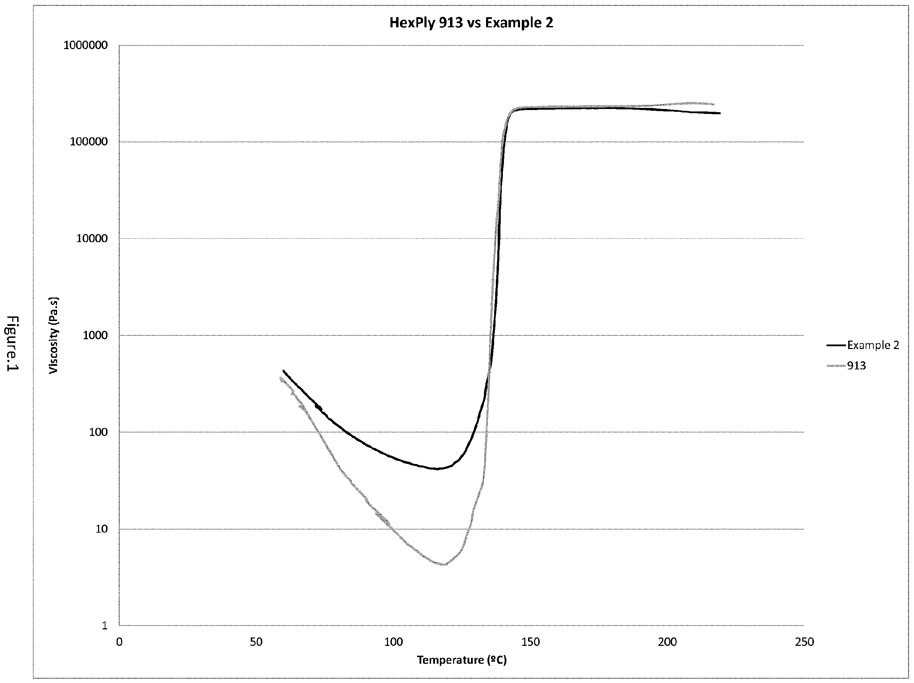

The viscosity is measured using a Gemini Bohlin rheometer with disposable 25 mm diameter aluminium plates, performing a 3Hz oscillation test at increasing temperature from 60°C to 220°C at 2°C/mm and 0.5% strain, with a gap of 500 micron metres. The minimum viscosity corresponds to the lowest value for the measured viscosity and the temperature for which the minimum viscosity is measured is the corresponding Tmin. Figure 1 illustrates a viscosity measurement and it is clear from this Figure that both the minimum viscosity and the corresponding temperature can be readily identified at the trough of the viscosity curve. Similarly the viscosity values to calculate Δ<η>/ ΔT over the above defined temperature ranges can also be determined from the viscosity curve and measurements.

The behaviour of thermosetting prepreg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. From this the complex modulus G* is derived as the complex oscillation which is applied to the material is known (Principles of Polymerization, John Wiley & Sons, New York, 1981).

In viscoelastic materials the stress and strain will be out of phase by an angle delta. The individual contributions making the complex modulus are defined as G' (Storage Modulus) = G* x cos (delta); G" (Loss Modulus) = G* x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" =0 and the phase angle delta is 0°, and for a purely viscous liquid, G'=0 and the phase angle delta is 90°.

The loss modulus G" indicates the irreversible flow behaviour and a material with a high loss modulus G" is also desirable to prevent the early creep-like flow and maintain an open air path for longer. Therefore the resin formulation of the present invention has a high storage modulus and a high loss modulus, and correspondingly a high complex modulus, at a temperature corresponding to a typical lay-up temperature, such as room temperature (21 °C).

In this specification, the viscoelastic properties, i.e. the storage modulus, loss modulus and complex viscosity, of the resin formulation used in the prepregs of the present invention were measured at application temperature (i.e. a lay-up temperature of 60°C) by using a Bohlin Gemini Oscillating Rheometer with disposable 25 mm diameter aluminium plates. The measurements were carried out with the following settings: an oscillation test at increasing temperature from 60°C to 220°C at 2°C/mm with a controlled frequency of 3 Hz and a gap of 500 µm.

In order to produce final products with substantially uniform mechanical properties it is important that the structural fibres and the epoxy resin formulation be mixed to provide a substantially homogenous prepreg. This requires uniform distribution of the structural fibres within the prepreg to provide a substantially continuous matrix of the resin formulation surrounding the fibres. It is therefore important to minimise the encapsulation of air bubbles within the resin formulation during application to the fibres. It is therefore preferred to use high viscosity resins. The prepregs should contain a low level of voids in order and it is therefore preferred that each prepreg and the prepreg stack has a water pick-up value of less than 2%, more preferably less than 1%, most preferably less than 0.5%. The water pick-up test determines the degree of waterproofing or impregnation of prepregs. For this purpose, a specimen of prepreg material is initially weighed and clamped between two plates in such a way that a strip of specimen 15 mm wide protrudes. This arrangement is suspended in the direction of the fibres in a water bath for 5 minutes. After removing the plates, the specimen is again weighed. The difference in weight is used as a measured value for the degree of impregnation. The smaller the amount of water picked up, the higher the degree of waterproofing or impregnation.

Once it is created in the mould the prepreg, prepreg stack or prepreg and other layers may be cured by exposure to an externally applied elevated temperature in the range 120°C to 130°C, and optionally elevated pressure, to produce a cured prepreg.

The curing of the prepreg is an exothermic reaction which may take the temperatures within the stack to above 120°C. In the preferred curing reaction the exotherm should not generate more than 350 Joules of energy per gram of the resin formulation employed.

Curing at a pressure close to atmospheric pressure can be achieved by the so-called vacuum bag technique. This involves placing the prepreg, prepreg stack or combination of layers of prepreg and layers of other materials in an air-tight bag and creating a vacuum on the inside of the bag, the bag may be placed in a mould prior or after creating the vacuum and the resin then cured by externally applied heat to produce the moulded laminate. The use of the vacuum bag has the effect that the stack experiences a consolidation pressure of up to atmospheric pressure, depending on the degree of vacuum applied. Prepregs of the present invention also exhibit excellent porosity and self-adhesion including drum peel when cured without an autoclave. It is believed this is in part due to the advantageous viscosity profiles of the present invention.

Upon curing, the prepreg, prepreg stack or laminar structure becomes a composite laminate, suitable for use in a structural application, such as for example such as an interior or external panel, a sleeve for helicopter rotor blades, or an aerospace structure. Such composite laminates can comprise structural fibres at a level of from 30 to 50 wt %.

The formulations are particularly useful in the production of prepregs based on glass or carbon fibre and particularly for those that are used as the matrix in the production of prepregs used in the production of aircraft components particularly the fuselage of helicopters. The epoxy resin formulation of this invention is particularly useful as the matrix composition in these materials where it is preferred that the resin formulation have a viscosity at 60°C in the range of 290 to 450 Pa.s, an onset of cure at from 110°C to 140°C, preferably 120°C to 130°C, a gel time of no more than 2 hours to produce a cured resin of Tg from 120 to 180 °C, preferably from 140 to 170 °C.

The invention will now be further illustrated by way of example only and with reference to Figure 1 in which the viscosity profile of a formulation of the invention is shown in relation to HexPly™ 913.

The invention is illustrated by the following examples in which the following formulations were prepared employing the following ingredients
- Araldite MY9512 - a multifunctional epoxy resin of EEW 125 from Huntsman.
- Phenoxy YP50 - a phenoxy resin toughener from Kukdo
- Kaneka MX153 - Core Shell Rubber mixed with a Bisphenol Resin of EEW 187 from.
- Kaneka MX416 - Core Shell Rubber mixed with a multifunctional epoxy resin MY721 from
- Exolit RP6500 - a halogen free red phosphorus flame retardant in an epoxy resin of EEW 180-190 from Clariant
- Exolit OP395 - a 10% phosphinate based flame retardant from Clariant
- Adipic Dihydrazide curative from Geniechem
- Omicure U52 urea based accelerator from Alzchem
- ECN1299 - an epoxy cresol novolac resin of EEW 200
- DER332 - a Bisphenol A epoxy resin of EEW 174
- UR500 - a urone accelerator
- CHS Epoxy 130T - a solid 3-type epoxy resin of EEW 700-800 from Spolchemie
- Epikote 181 - a bisphenol-A, epoxy resin of EEW 366 from Momentive

### Example 1

The following Formulations 1 to 4 were prepared by first mixing the components MY9512, YP50 and Exolit in the quantities as set out in the below Table 1. In Formulations 1, 3 and 4, MX153 was subsequently added to the mixture in the quantities as set out in the below Table 1. In Formulation 2, MX416 and Epikote 181 were added to the mixture of Formulation 2 in the quantity as shown in Table 1. Finally the relevant amounts of the other components were added to the Formulations in the quantities as shown in Table 1.

**Table 1. Formulations 1 to 4.**

| **Product** | **Formulation 1 wt%** | **Formulation 2 wt%** | **Formulation 3 wt%** | **Formulation 4 wt%** |
|---|---|---|---|---|
| MY9512 | 46.27 | 14.98 | 38.76 | 44.04 |
| YP50 | 7.5 | 7.5 | 7.5 | 7.5 |
| MX153 | 30 | | 10 | 23 |
| MX416 | | 40 | | |
| CHS130T | | | | 8 |
| Exolit RP6500 | 7.5 | 5 | 0.9 | 5 |
| Exolit OP395 | | | 4.3 | |
| Adipic Dihydrazide | 6.98 | 6.52 | 6.83 | 6.46 |
| UR500 | 1.75 | | 1.71 | |
| Omicure U52M | | 6 | | 6 |
| ECN1299 | | | 10 | |
| DER322 | | | 20 | |
| Epikote 181 | | 20 | | |
| ECN 1299 | | | 10 | |

The product properties of the compositions of Formulations 1 to 4 were investigated on a neat resin. It was found that the resin compositions all had a glass transition temperature (Tg) in the range of from 140 to 170 °C when cured at a ramp up rate of 2°C/min from room temperature to a temperature of 125°C, followed by a dwell phase during which the temperature was held at 125°C for 90 minutes.

### Example 2

The following resin formulation (Formulation 5) was prepared by mixing the following components (all quantities are weight% in relation to the composition):

| | |
|---|---|
| MY9512 | 44.04 wt% |
| MX153 | 23.00 wt% |
| CHS 130T | 8.00 wt% |
| YP50P | 7.50 wt% |
| Exolit RP6500 | 5.00 wt% |
| Omicure U52M | 6.00 wt% |
| Adipic Acid Dihydrazide | 6.46 wt% |

The resin was used to fully impregnate a reinforcement fabric AS4C-3K as supplied by Hexcel Corporation to form a prepreg. This fabric has an areal weight of 220 g/m² and contains carbon fibre. The fabric was woven using a satin weave and the tows were 3K tows (containing 3000 carbon filaments). The resin content of the prepreg was 45% by weight of prepreg.

Eight plies of this prepreg were laid up and cured to form laminates. The lay ups were cured both inside an autoclave at a pressure of 7 bar, and outside of the autoclave (OOA). The cure schedule was as follows: first an increase in temperature from room temperature (RT, 21 °C) at a rate of 2°C/min to a temperature of 125°C. This was followed by a dwell phase during which the temperature was held at 125°C for 90 minutes. Following the dwell phase, the laminates were allowed to cool down to room temperature.

The fibre volume content of the prepreg was 44.8% (volume of fibres as percentage of overall volume of prepreg). The thickness of the laminate was 2.21 mm.

Various performance parameters were measured as set out in the below Table 2. Prior to cure the prepreg samples were exposed to different conditions as set out in Table 2. Where reference is made to RT dry, the prepreg was held at standard room temperature conditions (21 °C) for 4 weeks and at a standard relative humidity of 55% before it was laid up and cured. Where reference is made to RT wet, the prepreg was held at RT at a relative humidity of 95% for 1 week, followed by RT at a relative humidity of 85% for 3 weeks before it was laid up and cured. Where reference is made to 90 °C dry, the prepreg was held at 90 °C temperature for 4 weeks and at a standard relative humidity of 55% before it was laid up and cured. Where reference is made to 90 °C wet, the prepreg was held at 90 °C at a relative humidity of 95% for 1 week, followed by 90 °C at a relative humidity of 85% for 3 weeks before it was laid up and cured.

**Table 2. Laminate of Example 2.**

| **Parameter (unit) - measurement standard** | **Value** |
|---|---|
| Prepreg Areal weight (g/m2) - EN 2557 | 405 |
| Fibre Areal weight (g/m2) - EN 2559 | 220 |
| Resin content (%) - EN 2559 | 46 |
| DSC Tg midpoint (°C) - EN 6041 | -2 |
| DSC - T onset (°C) - EN 6041 | 147 |
| DSC - T max (°C) - EN 6041 | 156 |
| DSC - DH (J/g resin) - EN 6041 | 384 |
| DMA Tg onset, dry log (°C) - EN 6032 | 167 |
| DMA Tg onset, wet log (°C) 1st shoulder - EN 6032 | 112 |
| DMA Tg onset, wet log (°C) - 2nd shoulder - EN 6032 | 129 |
| Tensile Weft Strength, dry, room temp(RT) - EN 2597B | 771 |
| Tensile Weft Modulus - EN 2597B | 55.2 |
| Compression Warp Strength, RT dry - EN 2850B | 632 |
| Compression Warp Strength, RT dry - EN 2850B | 697 |
| Compression Warp Strength, RT dry - EN 2850B | 671 |
| Compression Warp Strength, 90°C dry - EN 2850B | 520 |
| Compression Warp Strength,90 °C wet - EN 2850B | 450 |
| Compression Warp Modulus, RT dry - EN 2850B | 45.6 |
| Compression Weft Strength, RT dry - EN 2850B | 533 |
| Compression Weft Strength, 90 °C, wet - EN 2850B | 448 |
| Compression Weft Modulus, RT dry - EN 2850B | 47.5 |
| Compression Weft Modulus, 90 °C wet - EN 2850B | 46.5 |
| In Plane Shear Strength, RT dry - AITM 1.0002 | 102 |
| In Plane Shear Strength, 90 °C, wet - AITM 1.0002 | 57.5 |
| In Plane Shear Modulus, RT dry - AITM 1.0002 | 3.02 |
| In Plane Shear Modulus, 90 °C wet - AITM 1.0002 | 2.1 |
| Interlaminar shear Warp Strength, RT dry - EN 2563 | 55 |
| Interlaminar shear Warp Strength, 90 °C dry - EN 2563 | 46 |
| Interlaminar shear Warp Strength, 90 °C wet - EN 2563 | 34 |
| Climbing Drum Peel - Bag side (Nm/m) RT dry - EN 2243-3 Autoclave | 46.9 |
| Climbing Drum Peel - Bag side (Nm/m), RT dry - EN 2243-3 - Out of Autoclave | 27 |
| Interlaminar Fracture toughness Mode I - Gic, RT dry - AITM 1.0005 | 814 |
| Interlaminar Fracture toughness Mode II - Giic, RT dry - AITM 1.0006 | 2138 |
| CAI at 10 J - Delamination area (cm2) ISO 18352:2009 | 2.7 |
| CAI at 10 J - Indentation (mm) ISO 18352:2009 | 0.1 |
| CAI at 20 J - Delamination area (cm2) ISO 18352:2009 | 5.1 |
| CAI at 20J - Indentation (mm) ISO 18352:2009 | 0.2 |
| CAI at 30 J - Delamination area (cm2) ISO 18352:2009 | 6.5 |
| CAI at 30 J - Indentation (mm) ISO 18352:2009 | 0.43 |

The adhesiveness of the prepreg of Example 2 was tested in accordance with the standardized test IGC 04.26.220. Sheets of prepreg were tested to see if they would stick to themselves (test I), if the prepreg could be removed after lay up without deterioration to the prepreg (test II), and prepreg was mounted on a vertical PTFE surface to establish if the prepreg would remain adhered to this surface (test III). In all cases, the tests were satisfactory and the prepreg had an advantageous self-adhesiveness, and adhesiveness or tack.

The viscosity profile of the neat resin of Example 2 was compared to a resin which contains a curative system comprising a DICY curative in combination with a urea based curing agent in the form of HexPly™ 913, see Figure 1.

The out of autoclave porosity of the formulation of Example 2 was measured by examining a cross section of a laminate prepared from microscope analysis test for the resin of example 2 impregnated into Primetex 193PW fabric with 50 wt% resin content, see Table 4. Eight plies of the impregnated fabric were laid to for a stack vacuum bagged and then cured in an oven by heating 2 °C/min to 125 °C and holding for 2 hours at 125 °C to form a laminate. The laminate was measured by microscopic analysis of 20 spaced cross sections measuring 30 x 40 mm in cross section (spacing 5 cm) of a cured sample of the laminate. The cross section was polished and analysed under a microscope over a viewing angle of 4.5 to 3.5 mm to determine the surface area of the voids in relation to the total surface area of each cross section of the sample and these measurements are averaged for the number of cross sections. This method for determining the void fraction is used within the context of this specification, although alternative, standardized methods are available such as DIN EN 2564. These methods are however expected to provide comparative results in relation to the microscopic analysis as outlined here. Also, the maximum size of the voids is assessed in each viewing angle section and this number is averaged over the 20 samples. The average surface area of the voids is taken as the value of the void content by volume.

**Table 4**

| | Porosity | Cure cycle |
|---|---|---|
| Example 2 with Primetex 193PW | 1.47% | Heat up rate 1°C/min, dwell 2h @70°C and cured 90min @ 125°C |

### Example 3

**Preparation of resins of formulation A and B:** Resin samples were made according to the weight % of formulations A and B as set out in Table 4. The resin samples of were prepared by first by combining the MY9152 resin with the phenoxy and mixing with a Z-blade mixer

(Winkworth Machinery Ltd, Reading, England). The flame retardants, core shell rubber and curing agents were mixed separately and added to the resin.

### Preparation of Prepreg:

The resins were cast as a film onto paper and then impregnated into G0939 carbon fibre fabric (Hexcel Reinforcements, Les Avenieres, France) with a resin content of 45%. A prepreg samples were produced by combining eight plies of impregnated fabric into a stack with each ply orientated at 0°. The stacks were then and press cured by heating 2°C/min to 125°C and holding for 2 hours at 125°C.

### Testing of prepreg and resin:

The neat resins of Example 3 were tested for ΔH of cure using a DSC according to EN 6041, viscosity measures were performed using a Bohlin Gemini Oscillating Rheometer with disposable 25 mm diameter aluminium plates, performing a 3Hz oscillation test at increasing temperature from 60°C to 220°C at 2°C/mm and 0.5% strain, with a gap of 500 micron metres.

The prepregs of Example 3 were tested for Tg using a DMA in accordance with EN 6032, for wet and dry samples. The wet samples had been immersed in water at 70°C for two weeks or at 85°C for 5 days. A climbing drum peel test was also performed in accordance with EN 2243-3 to examine the self-adhesive behaviour of the prepregged resin.

**Table 5. Example 3, MY 9512 was varied to maintain stoichiometric ratio of epoxy to curing agent active groups.**

| | **Formulation A (wt %)** | **Formulation B (wt %)** |
|---|---|---|
| MY 9512 | 47.76 | 49 |
| Phenoxy YP50P | 7.5 | 7.5 |
| MX153 | 30 | 30 |
| Exolit RP6500 | 1.5 | 1.5 |
| Exolit OP935 | 4.3 | 4.3 |
| Dicy | | 5.41 |
| UR500 | 1.79 | 2.29 |
| Adipic Dihydrazide | 7.15 | |
| | | |
| Neat Resin | | |
| ΔH uncured | 351.35 | 381 |
| Viscosity at 60ºC | 230 | 210 |
| Min viscosity (Pas) | 52 | 43.4 |
| Temperature at min viscosity (ºC) | 106.1 | 108 |

| Prepreg | | |
|---|---|---|
| Tg press cured (2ºC/min + 2 hrs @ 125ºC) | 143.81 | 148.23 |
| Tg wet prepreg( 5 days H₂O immersion @ 85ºC) | 107.47 | 100.03 |
| Tg wet prepreg (2 weeks H₂O immersion @ 70ºC) | 107.47 | 90.79 |
| CDP (Nm/m) | 35 | 30 |

## Claims

1. A formulation comprising
a. from 10 to 60 wt% of a polyfunctional epoxy resin
b. from 3 to 20 wt% of a phenoxy resin
c. from 5 to 50 wt% of a modifier or toughener, preferably a rubber toughener or modifier
d. from 3 to 20 wt% of a fire retardant
e. from 1 to 15 wt% of a curative system, said system being free from a cyandiamide curative.

2. A formulation according to claim 1 in which the poly functional epoxy resin comprises a resin having a functionality of 4.

3. A formulation according to any of the preceding claims in which the polyfunctional epoxy resin has an EEW in the range from 100 to 1500 preferably in the range of from 100 to 250.

4. A formulation according to any of the preceding claims wherein the curative system comprises a hydrazide, preferably comprising adipic dihydrazide.

5. A formulation according to any of the preceding claims containing an accelerator for the curative system.

6. A formulation according to any of the preceding claims in which the rubber epoxy adduct comprises an epoxy/elastomer adduct.

7. A formulation according to Claim 6 in which the epoxy/elastomer adduct includes 1:5 to 5:1 parts of epoxy to elastomer.

8. A formulation according to any of the preceding claims in which the fire retardant halogen free and is phosphorus based.

9. A formulation according to any of the preceding claims, wherein The minimum viscosity of the formulation according to the invention (measured as described in the description) may be in the range of from 5 to 150 Pa.s, preferably from 30 to 100 Pa.s, and more preferably from 40 to 50 Pa.s at a temperature ranging from 90 to 130 °C, more preferably from 100 to 125 °C, and even more preferably from 110 to 120 °C and/or combinations of the aforesaid ranges (for both viscosity and temperature).

10. A formulation according to any of the preceding claims, wherein the formulation has a viscosity coefficient defined as Δ<η>/ ΔT where Δ<η> is the average difference of the viscosity over temperature interval ΔT, in the range of from -1 to -25 Pa.s/°C, preferably from -10 to -16 Pa.s/°C and more preferably from -12 to -14 Pa.s/°C over the temperature range of from 60 to 90 °C.

11. A formulation according to any of the preceding claims, wherein the formulation has a viscosity coefficient Δ<H>/ ΔT in the range of from -0.01 to -3 Pa.s/°C, preferably from -0.1 to -2 Pa.s/°C, more preferably from -1 to -1.5 Pa.s/°C over the temperature range of from 90 °C to Tmin where Tmin is the temperature for which the viscosity of the resin is at its minimum.

12. A laminar structure comprising one or more layers of a cured prepreg comprising a formulation according to any of the preceding claims.

13. The use of a laminar structure according to Claim 12 as a matrix in a prepreg used as a component in an aircraft.

14. The use according to claim 13 in which the formulation is free from solvent

15. An aircraft component comprising a cured prepreg comprising a formulation according to any of claims 1 to 11.

## Patentansprüche

1. Formulierung, umfassend
a. 10 bis 60 Gew.-% eines polyfunktionellen Epoxidharzes,
b. 3 bis 20 Gew.-% eines Phenoxyharzes,
c. 5 bis 50 Gew.-% eines Modifizierungsmittels oder Zähigkeitsvermittlers, vorzugsweise eines Kautschuk-Zähigkeitsvermittlers oder -Modifizierungsmittels,
d. 3 bis 20 Gew.-% eines Flammschutzmittels,
e. 1 bis 15 Gew.-% eines Härtersystems, wobei das System frei von einem Cyandiamid-Härter ist.

2. Formulierung nach Anspruch 1, wobei das polyfunktionelle Epoxidharz ein Harz mit einer Funktionalität von 4 umfasst.

3. Formulierung nach einem der vorhergehenden Ansprüche, wobei das polyfunktionelle Epoxidharz ein EEW im Bereich von 100 bis 1500, vorzugsweise im Bereich von 100 bis 250, aufweist.

4. Formulierung nach einem der vorhergehenden Ansprüche, wobei das Härtersystem ein Hydrazid, vorzugsweise Adipinsäuredihydrazid, umfasst.

5. Formulierung nach einem der vorhergehenden Ansprüche, die einen Beschleuniger für das Härtersystem enthält.

6. Formulierung nach einem der vorhergehenden Ansprüche, wobei das Kautschuk-Epoxid-Addukt ein Epoxid/Elastomer-Addukt umfasst.

7. Formulierung nach Anspruch 6, wobei das Epoxid/Elastomer-Addukt 1:5 bis 5:1 Teile Epoxid zu Elastomer umfasst.

8. Formulierung nach einem der vorhergehenden Ansprüche, wobei das Flammschutzmittel halogenfrei ist und auf Phosphor basiert.

9. Formulierung nach einem der vorhergehenden Ansprüche, wobei die Mindestviskosität der erfindungsgemäßen Formulierung (gemessen wie in der Beschreibung beschrieben) im Bereich von 5 bis 150 Pa.s, vorzugsweise von 30 bis 100 Pa.s und weiter bevorzugt von 40 bis 50 Pa.s bei einer Temperatur im Bereich von 90 bis 130°C, weiter bevorzugt 100 bis 125°C und noch weiter bevorzugt 110 bis 120°C und/oder Kombinationen der oben aufgeführten Bereiche (sowohl für die Viskosität als auch für die Temperatur) liegen kann.

10. Formulierung nach einem der vorhergehenden Ansprüche, wobei die Formulierung einen als Δ<η>/ΔT, wobei Δ<η> die durchschnittliche Differenz der Viskosität über das Temperaturintervall ΔT ist, definierten Viskositätskoeffizienten im Bereich von -1 bis -25 Pa.s/°C, vorzugsweise von -10 bis -16 Pa.s/°C und weiter bevorzugt von -12 bis -14 Pa.s/°C über den Temperaturbereich von 60 bis 90°C aufweist.

11. Formulierung nach einem der vorhergehenden Ansprüche, wobei die Formulierung einen Viskositätskoeffizienten Δ<η>/ΔT im Bereich von
- 0,01 bis -3 Pa.s/°C, vorzugsweise von -0,1 bis -2 Pa.s/°C, weiter bevorzugt von -1 bis -1,5 Pa.s/°C über den Temperaturbereich von 90°C bis Tmin aufweist, wobei Tmin die Temperatur ist, für die die Viskosität des Harzes minimal ist.

12. Schichtstruktur mit einer oder mehreren Schichten eines gehärteten Prepreg, das eine Formulierung nach einem der vorhergehenden Ansprüche umfasst.

13. Verwendung einer Schichtstruktur nach Anspruch 12 als Matrix in einem Prepreg, das als Bauteil in einem Luftfahrzeug verwendet wird.

14. Verwendung nach Anspruch 13, wobei die Formulierung lösungsmittelfrei ist.

15. Luftfahrzeugbauteil, umfassend ein gehärtetes Prepreg, das eine Formulierung nach einem der Ansprüche 1 bis 11 umfasst.

## Revendications

1. Formulation comprenant
a. de 10 à 60 % en poids d'une résine époxy polyfonctionnelle,
b. de 3 à 20 % en poids d'une résine phénoxy,
c. de 5 à 50 % en poids d'un modificateur ou agent de ténacité, de préférence un agent de ténacité ou modificateur à base de caoutchouc,
d. de 3 à 20 % en poids d'un ignifugeant,
e. de 1 à 15 % en poids d'un système durcisseur, ledit système étant dépourvu d'un durcisseur à base de cyandiamide.

2. Formulation selon la revendication 1 dans laquelle la résine époxy polyfonctionnelle comprend une résine ayant une fonctionnalité de 4.

3. Formulation selon l'une quelconque des revendications précédentes dans laquelle la résine époxy polyfonctionnelle a un EEW dans la gamme de 100 à 1500, de préférence dans la gamme de 100 à 250.

4. Formulation selon l'une quelconque des revendications précédentes dans laquelle le système durcisseur comprend un hydrazide, comprenant de préférence un dihydrazide adipique.

5. Formulation selon l'une quelconque des revendications précédentes contenant un accélérateur pour le système durcisseur.

6. Formulation selon l'une quelconque des revendications précédentes dans laquelle l'adduit de caoutchouc et d'époxy comprend un adduit époxy/élastomère.

7. Formulation selon la revendication 6 dans laquelle l'adduit époxy/élastomère présente un rapport de 1:5 à 5:1 entre les parties d'époxy et d'élastomère.

8. Formulation selon l'une quelconque des revendications précédentes dans laquelle l'ignifugeant est dépourvu d'halogène et est à base de phosphore.

9. Formulation selon l'une quelconque des revendications précédentes, la viscosité minimale de la formulation selon l'invention (mesurée comme décrit dans la description) pouvant se situer dans la gamme de 5 à 150 Pa.s, de préférence de 30 à 100 Pa.s, et mieux encore de 40 à 50 Pa.s à une température allant de 90 à 130 °C, mieux de 100 à 125 °C, et mieux encore de 110 à 120 °C et/ou les combinaisons des gammes précitées (à la fois pour la viscosité et la température).

10. Formulation selon l'une quelconque des revendications précédentes, la formulation ayant un coefficient de viscosité défini comme Δ<η>/ΔT où Δ<η> est la différence moyenne de la viscosité sur l'intervalle de temps ΔT dans la gamme de -1 à - 25 Pa.s/°C, de préférence de -10 à -16 Pa.s/°C et mieux encore de -12 à -14 Pa.s/°C sur la gamme de température de 60 à 90 °C.

11. Formulation selon l'une quelconque des revendications précédentes, la formulation ayant un coefficient de viscosité Δ<η>/ΔT dans la gamme de -0,01 à -3 Pa.s/°C, de préférence de -0,1 à -2 Pa.s/°C, mieux encore de -1 à -1,5 Pa.s/°C sur la gamme de température de 90 °C à Tmin où Tmin est la température pour laquelle la viscosité de la résine est à son minimum.

12. Structure stratifiée comprenant une ou plusieurs couches d'un préimprégné durci comprenant une formulation selon l'une quelconque des revendications précédentes.

13. Utilisation d'une structure stratifiée selon la revendication 12 comme matrice dans un préimprégné utilisé comme composant dans un aéronef.

14. Utilisation selon la revendication 13 dans laquelle la formulation est dépourvue de solvant.

15. Composant d'aéronef comprenant un préimprégné durci comprenant une formulation selon l'une quelconque des revendications 1 à 11.
